# FASCICULE DE BREVET EUROPEEN

(11) **EP 2 160 587 B1**
(45) Date de publication et mention de la délivrance du brevet: **08.12.2010**
(21) Numéro de dépôt: 08761390.7
(22) Date de dépôt: 26.06.2008
(51) Int. Cl.: G01N 3/313, G01M 7/08

(54) **TABLE À CHOC PYROTECHNIQUE.**
PYROTECHNIK-SCHOCKTABELLE
PYROTECHNIC SHOCK TABLE

(30) Priorité: 28.06.2007 FR 0756120
(43) Date de publication de la demande: 10.03.2010
(73) Titulaire: Astrium SAS, 75016 Paris (FR)
(72) Inventeur: THOREUX, Sébastien, F-33160 Saint Aubin de Medoc (FR); BABENKO, Pierre, F-33140 Villenave d'Ornon (FR); BILLEREY, Rolland, F-33160 Saint Medard en Jalles (FR); PEBE, Pascal, F-33140 Villenave (FR)
(74) Mandataire: Ilgart, Jean-Christophe
(86) Numéro de dépôt international: PCT/EP2008/058203
(87) Numéro de publication internationale: WO 2009/000897

(56) Documents cités:
- WO-A-2006/097442
- US-A- 4 379 401
- BATEMAN VESTA I ET AL: "Recommended practice for pyroshock" INST ENVIRON SCI PROC ANNU TECH MEET; INSTITUTE OF ENVIRONMENTAL SCIENCES - PROCEEDINGS, ANNUAL TECHNICAL MEETING; DESIGN, TEST, AND EVALUATION 1995 INST OF ENVIRONMENTAL SCIENCES, MOUNT PROSPECT, IL, USA, 1995, pages 208-216, XP008089642
- LIEBERMAN P ET AL: "Optical system for measurement of pyrotechnic test accelerations" JOURNAL OF THE IES USA, vol. 35, no. 6, novembre 1992 (1992-11), pages 25-39, XP008089630 ISSN: 1052-2883
- CAMBIER F ET AL: "Development of a test facility to simulate pyroshock environments in a laboratory" INT CONF STRUCT UNDER SHOCK IMPACT; INTERNATIONAL CONFERENCE ON STRUCTURES UNDER SHOCK AND IMPACT, SUSI 1998 COMPUTATIONAL MECHANICS INC, BILLERICA, MA, USA, 1998, pages 273-282, XP001062347

## Description

### DOMAINE TECHNIQUE

L'invention concerne une table à choc pyrotechnique.

Plus précisément, l'invention concerne une table à choc comportant au moins un plateau, un équipement à tester étant fixé sur le plateau et une charge explosive étant fixée sous le plateau.

Les véhicules spatiaux, qu'il s'agisse de lanceurs, de sondes, de véhicules de rentrée dans l'atmosphère, sont équipés de systèmes pyrotechniques destinés à assurer les séparations : séparation d'étage au lancement mais aussi séparation de charge utile, de module de descente, de module de service, etc.

Lors du fonctionnement de dispositifs mettant en oeuvre un explosif, la détonation de ce dernier induit des vibrations intenses qui se propagent dans tout le véhicule spatial sous forme d'onde de choc et de champ vibratoire. Ces vibrations sont susceptibles d'endommager gravement tous les éléments qui constituent le véhicule spatial, à savoir d'une part ses structures et d'autre part ses équipements.

Il est donc important, lors de la construction du véhicule spatial, de s'assurer que tous ces éléments peuvent supporter ces sollicitations et remplir leur fonction pendant toute la durée de vie du véhicule.

La détonation d'un explosif se traduit par le passage de vibrations dans les matériaux. Ces ondes peuvent être analysées par des accéléromètres qui permettent de mesurer l'intensité des accélérations en fonction du temps. Ce type de courbe est appelé « signal temporel » car il représente directement l'accélération en fonction du temps. Ces courbes sont peu exploitables en l'état. C'est pourquoi elles sont analysées en terme de fréquence, sous la forme d'un diagramme d'intensité de l'accélération en fonction de la fréquence dit spectre de réponse au choc (SRC) ou SRS (shock response spectrum). Il s'agit d'une estimation du pic d'accélération que verrait une structure à une fréquence donnée.

De façon générale il y a une linéarité approximative entre les logarithmes de l'accélération et de la fréquence, les accélérations pouvant atteindre 10⁶ g pour des fréquences de 1 MHz.

L'analyse des phénomènes de propagation de ces ondes dans les matériaux a conduit à distinguer deux situations en fonction de la distance entre la mesure et la source de détonation.

On parle de champ proche à très courte distance de la source c'est-à-dire à moins de 0,2 mètre environ. Alors, le choc initial n'est pas amorti et toutes les fréquences jusqu'aux plus hautes à 5.10⁵Hz sont détectées avec des accélérations très élevées jusqu'à 10⁵ g à haute fréquence.

Plus loin de la source (au-delà d'un mètre) on parle de champ lointain. Les hautes fréquences sont amorties. Au dessus de 10⁴ Hz, l'accélération ne croît plus avec la fréquence voire diminue. Les accélérations ne dépassent pas 10³g. Par contre, les vibrations ont excité les modes propres des structures si bien que le SRC peut présenter des pics dans le domaine au dessous de 10⁴ Hz.

Il existe deux grandes familles de moyen de simulation, selon que l'on cherche à simuler les chocs en champ proche ou en champ lointain.

Les chocs en champ lointain (à basse fréquence) sont simulés par des moyens mécaniques tel que des marteaux ou des pots vibrants. Ces moyens sont couramment utilisés car relativement faciles à mettre en oeuvre mais la gamme de fréquence atteinte ne dépasse pas les 2.10³ Hz et ces essais sont en général unidirectionnels. Les documents US 5 400 640 et US 5 565 626 décrivent des dispositifs de ce type.

Les chocs en champ proche (à haute fréquence) sont simulés par des moyens pyrotechniques. C'est à de tels moyens que l'invention se rapporte.

On connaît (FR 2 802 300) un document décrivant un moyen pyrotechnique de simulation. Il concerne plutôt la simulation pour des structures puisqu'il s'agit de simuler le comportement par exemple un adaptateur de charge utile. Qui plus est, l'essai est spécifique à la structure que l'on cherche à caractériser en terme de tenue au choc.

Par contre on trouve dans le Shock and Vibration Handbook, page 26.24 et 26.25 la description d'un moyen de type « table à choc » qui apparaît comme un moyen générique d'essai. C'est un moyen en tant que tel sur lequel on vient fixer le spécimen à caractériser, ce spécimen étant plutôt du type équipement, un boîtier électronique par exemple. C'est un moyen que l'on peut régler dans une certaine mesure en fonction de l'équipement à tester et du choc à simuler. Ces tables à choc sont constituées d'une plaque suspendue horizontalement ou verticalement sur laquelle on fixe les équipements à tester. Sur la face de la plaque opposée à l'équipement on génère le choc avec un explosif. Au voisinage de l'équipement, on place des capteurs de chocs qui permettent de vérifier et de valider l'essai.

On notera également qu'il existe des plaques doubles et des plaques simples. Les plaques doubles sont désignées sous le qualificatif de « résonnante ». Il est évident pour un homme du métier, que lier deux plaques par un système de liaison pointées rigides crée un système résonant. En d'autres termes, la géométrie de l'ensemble peut provoquer une amplification des vibrations pour certaines fréquences. Cela signifie que les plaques doubles permettent une augmentation des accélérations pour certaines fréquences, en fonction de la géométrie précise des deux plaques et de leur liaison.

Cependant, cette table à choc connue présente des inconvénients.

Le principal inconvénient des moyens d'essai de choc pyrotechnique connus n'est pas spécifique à la table à choc. Cet inconvénient est que les moyens existants ne permettent pas de couvrir de façon suffisante tout le spectre des fréquences et qu'il faut donc en général réaliser un essai basse fréquence sur un moyen mécanique et un essai haute fréquence sur un moyen pyrotechnique.

On peut songer à étendre le champ d'application d'un moyen pyrotechnique vers les basses fréquences en augmentant pour cela la charge explosive. Mais cette solution n'est pas satisfaisante pour au moins deux raisons :
- la table à choc fonctionnant de par sa géométrie en champ proche, elle générera de toute façon plus de signaux haute fréquence que de signaux basse fréquence et l'augmentation des signaux basse fréquence sera très difficile ;
- même si on peut augmenter le choc basse fréquence, cette augmentation sera accompagnée d'une augmentation simultanée du choc haute fréquence. Cela aboutira en général à ce que l'on appelle une surqualification de l'équipement testé. Au cours de l'essai, l'équipement est soumis simultanément au choc basse fréquence souhaité mais aussi à un choc haute fréquence beaucoup trop élevé, d'où la nécessité pour l'équipement d'être surdimensionné au choc.

Un autre inconvénient des tables à choc connues est leur usure rapide. Lors de l'explosion, l'explosif dégage des gaz très chauds qui ont tendance à détériorer la plaque par fusion et à la déformer. Cela rend les étalonnages d'autant plus difficiles et oblige à changer la plaque après un nombre limité d'essai ce qui rend les essais coûteux.

On notera en outre que dans tous les exemples connus, l'explosif utilisé est linéaire (cordeau). De ce fait, le choc généré n'est pas symétrique de révolution par rapport à la plaque et il n'est donc pas possible d'appliquer un choc homogène sur les équipements testés. Cela complique aussi la mesure du choc car il faut multiplier l'instrumentation pour connaître le choc dans la plaque. Enfin, un explosif linéaire augmente la surface de la zone usée et accentue encore la déformation de la plaque après essai.

Enfin, quand l'explosif est au contact direct de l'équipement, la simulation ne peut porter que sur le champ proche, car il n'y a aucun dispositif pour exciter les basses fréquences ni filtrer les hautes fréquences.

Les articles des auteurs Bateman Vesta I et al. "Recommended practice for pyroshock" Inst. Environ. Sci. Proc. Annu. Tech. Meet.; Institute of environmental sciences - proceedings, annual technical meeting; design, test and evaluation 1995 Inst. of environmental sciences, MOUNT PROSPECT, IL, USA, 1995 , pages 208-216 et Lieberman P et al. "Optical system for measurement of pyrotechnic test accelerations" Journal of the IES USA, vol. 35, no. 6, novembre 1992, pages 25-39, ainsi que le brevet US 4 379 401 font également parti de l'état de l'art.

La présente invention a précisément pour objet une table à choc qui remédie à ces inconvénients. Ces buts sont atteints, conformément à l'invention, par le fait qu'une rondelle circulaire de support d'explosif est interposée entre le plateau et la charge explosive.

Cette rondelle a essentiellement un rôle de protection de la plaque ou des plaques de la table à choc. Elle est en fait directement au contact de l'explosif et subit une érosion à chaque tir.

Dans une réalisation, la rondelle de support d'explosif mesure 300 mm de diamètre et 60mm d'épaisseur.

Avantageusement, la charge d'explosif est ponctuelle. Cette charge explosive ponctuelle est placée au centre de la rondelle de support. Elle constitue une source de choc de symétrie de révolution autour de la rondelle.

Dans une réalisation, l'explosif utilisé est du Formex F4HV en 4 mm d'épaisseur découpé en plaque de 50 mm de large.

Avantageusement, la longueur des plaques est inférieure ou égale à 150 mm.

Dans une réalisation avantageuse, la table à choc comporte un plateau supérieur et un plateau inférieur séparés par des plots, l'équipement à tester étant fixé sur le plateau supérieur et la charge explosive étant fixée sous le plateau inférieur.

Les plots qui séparent le plateau inférieur et le plateau supérieur peuvent comprendre des rondelles amortissantes en un matériau élastique. Le matériau amortissant des rondelles est par exemple le caoutchouc ou le téflon.

Dans une réalisation particulière les plots qui séparent le plateau inférieur et le plateau supérieur comprennent deux rondelles situées sur chacune des deux faces de la plaque supérieure, l'une des rondelles étant prise entre un élément d'entretoise et une première face du plateau supérieur, l'autre rondelle étant prise entre une seconde face du plateau supérieur et une rondelle métallique, l'ensemble de ces rondelles étant serrées par un écrou.

Dans une réalisation avantageuse, la rondelle de support d'explosif et la plaque inférieure comportent un trou de transmission en leur centre, trou destiné à permettre la transmission du choc au plateau supérieur par l'air ambiant.

Dans ce cas, une plaque de protection est avantageusement disposée sous la plaque supérieure en regard du trou de transmission afin de protéger la plaque supérieure. Dans une réalisation, la plaque de protection est en acier et mesure 10 mm d'épaisseur.

Par ailleurs l'invention concerne un procédé d'essai d'un équipement monté sur un plateau de table à choc. Selon ce procédé :
- on définit l'équipement à tester en termes de masse et de points de fixation ;
- on définit les spécifications du choc en termes de spectre de réponse au choc et éventuellement de direction du choc ;
- on définit la quantité d'explosif à mettre en oeuvre à partir de l'expérience acquise et/ou de simulation numérique ;
- on définit la nature monoplaque ou double plaque de la table à choc.

Dans le cas ou la table à choc est une table comportant une plaque supérieure et une plaque inférieure espacées par des plots, on procède à l'optimisation de la table en termes d'amortissement au niveau des plots et de diamètre de perçage de la rondelle de support d'explosif.

En particulier on optimise le nombre, la position et la matière des rondelles.

D'autre caractéristiques et avantages de l'invention apparaîtront encore à la lecture de la description qui suit d'exemples de réalisation donnés à titre illustratif en référence aux figures annexées. Sur ces figures :
- la figure 1 est une vue schématique d'ensemble d'une table à choc conforme à la présente invention ;
- la figure 2 représente cinq spectres de réponse au choc pour différentes épaisseurs de rondelle de support de l'explosif et pour différentes valeurs de la charge explosive ;
- la figure 3 est une vue schématique en perspective de la charge explosive ;
- la figure 4 est une vue schématique en coupe d'un plot de liaison entre le plateau supérieur et le plateau inférieur d'une table à choc conforme à la présente invention ;
- Les figures 5 à 7 sont trois spectres de réponse au choc pour trois valeurs croissantes de charge explosive ;
- les figures 8 et 9 représentent respectivement une vue de face de la plaque inférieure et de la plaque supérieure montrant la répartition des perçages destinés à recevoir les plots de fixation ;
- la figure 10 est une vue schématique en coupe montrant une table à choc conforme à la présente invention équipée d'une rondelle de support de l'explosif percée en son centre ;
- la figure 11 représente trois spectres de réponse au choc respectivement avec une table standard (sans trou), avec un trou de 10 mm et avec un trou de 30 mm.

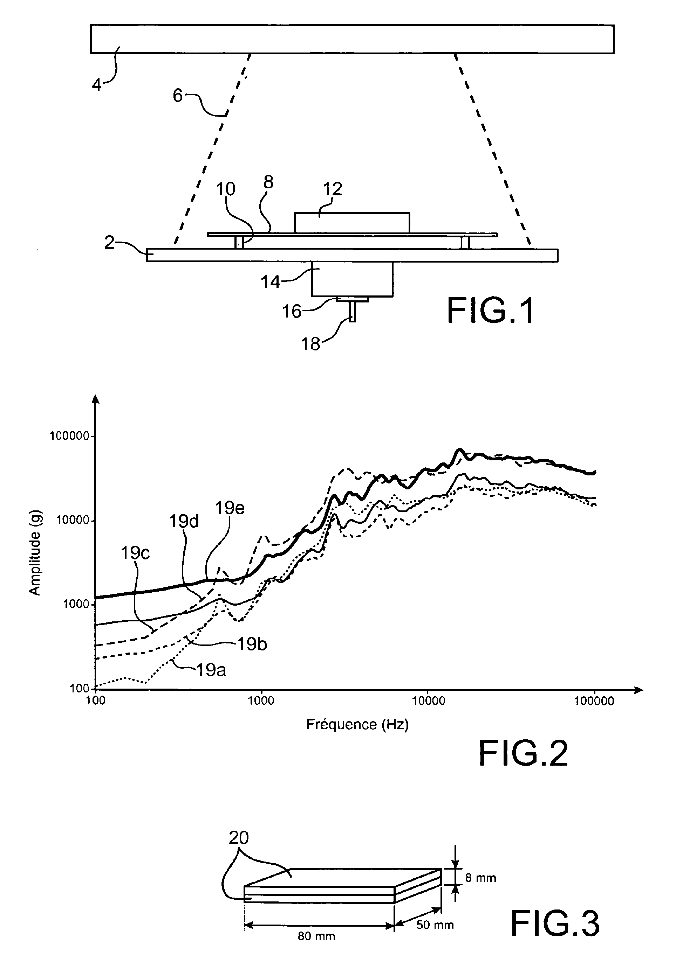

On a représenté sur la figure 1 une vue schématique d'une table à choc conforme à la présente invention. Elle comporte un plateau inférieur 2 suspendu à un portique 4 par des chaînes 6 et un plateau supérieur 8 relié au plateau inférieur par des plots 10. Un équipement à tester 12 est monté sur la face supérieure du plateau supérieur 8. Sur la face inférieure du plateau inférieur 2 on trouve une rondelle de support d'explosif 14 de forme circulaire et montée au centre du plateau inférieur 2. Une charge d'explosif ponctuelle 16 est placée sous la face inférieure de la rondelle de support de l'explosif 14. Cette charge est mise à feu par un détonateur 18. La rondelle de support de l'explosif a essentiellement un rôle de protection du plateau inférieur 2 de la table à choc. Elle est en effet directement en contact de l'explosif et subit une érosion à chaque tir. Des essais ont montré (voir figure 2) que l'épaisseur de cette plaque est quasiment sans influence sur le choc dans pratiquement toute la bande de fréquence.

Les courbes 19a à 19e représentent respectivement une charge de 10 g d'explosif avec une rondelle de 20 mm d'épaisseur, une charge de 10 g d'explosif avec une épaisseur de rondelle de 60 mm, une charge d'explosif de 30 g avec une épaisseur de rondelle de 30 mm, une charge d'explosif de 30 g avec une épaisseur de rondelle de 20 mm, et enfin une charge d'explosif de 10 g avec une épaisseur de rondelle de 30 mm.

Il apparaît sur les courbes un écart aux basses fréquences mais la forme de ces courbes est en fait liée à un problème de mesure. Ces courbes montrent également l'effet de la quantité d'explosif mise en oeuvre : plus cette quantité est élevée, plus le niveau de choc exprimé en accélération est aussi élevé.

Les essais ont conduit à retenir une rondelle de support d'explosif de 60 mm d'épaisseur et de 300 mm de diamètre en acier. Les essais ayant montré le peu d'influence de la matière de cette rondelle, c'est le matériau le plus résistant et le moins coûteux qui a été retenu pour cette rondelle qui est une plaque d'usure.

L'explosif utilisé est du Formex F4HV en 4mm d'épaisseur, découpé en plaque de 50 mm de large. La longueur des plaques dépend de la quantité d'explosif mis en oeuvre. Elle peut atteindre 150 mm. On peut éventuellement empiler deux ou plusieurs plaques de Formex 20. C'est cette disposition de l'explosif, placé sur sa rondelle de support 14 qui constitue une source de choc de symétrie de révolution autour de la rondelle.

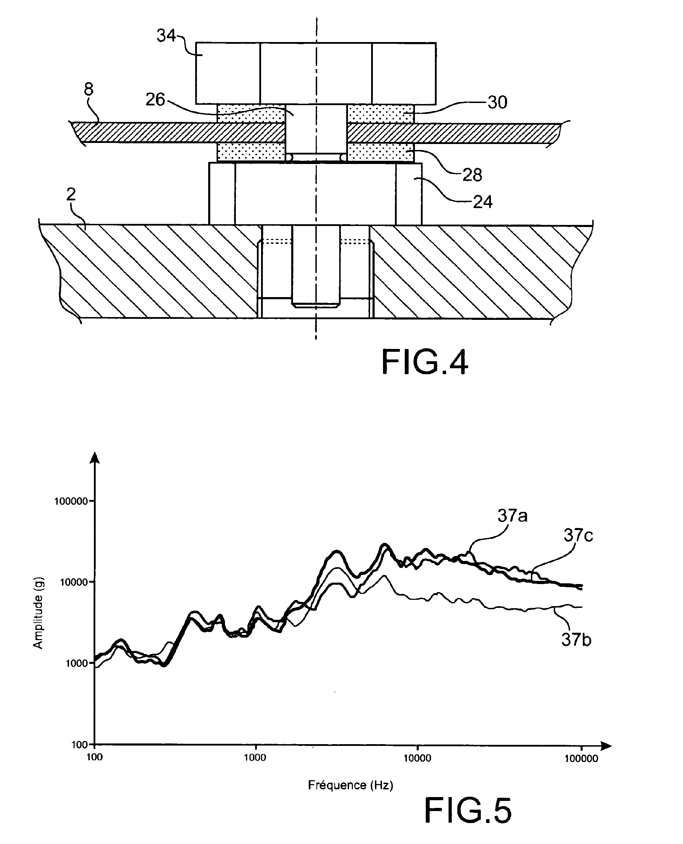

On a représenté sur la figure 4 une vue schématique en coupe à échelle agrandie montrant la liaison entre le plateau inférieur 2 et le plateau supérieur 4. Une entretoise 24 comporte un pion 26 qui traverse le plateau supérieur 8. Une rondelle inférieure 28 et une rondelle supérieure 30 sont disposées de part et d'autre du plateau supérieur 8. Les rondelles 28 et 30 sont réalisées en un matériau élastique, par exemple le caoutchouc ou le téflon. Un écrou 34 vient bloquer l'ensemble de ces rondelles les unes sur les autres. L'écrou 34 est vissé sur le pion 36.

Les figures 5 à 7 représentent trois spectres de réponse au choc pour trois valeurs croissantes de charge explosive.

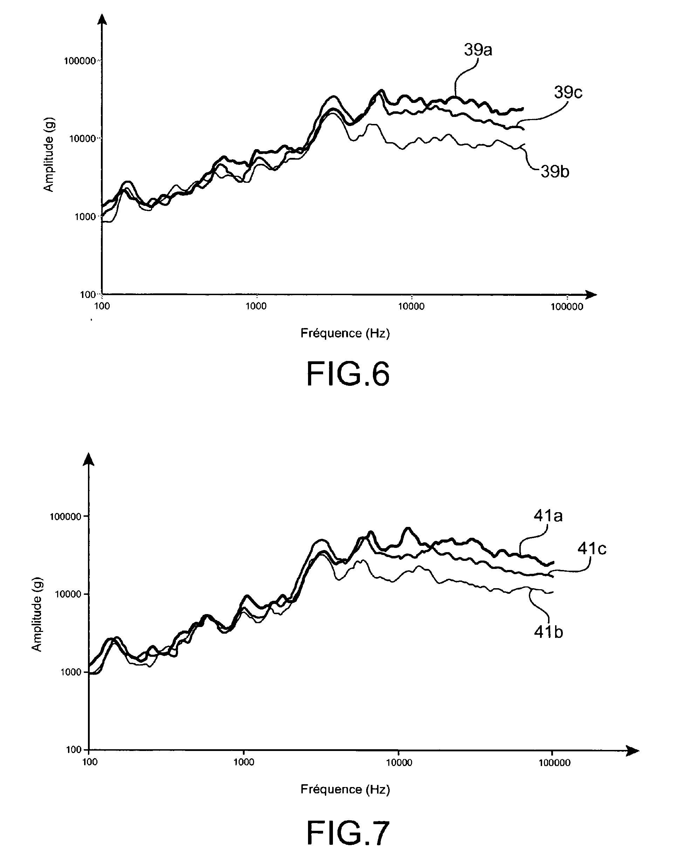

La figure 5 correspond à une charge de 20 grammes, la figure 6 a une charge de 40 grammes et la figure 7 à une charge de 60 grammes.

Sur la figure 5, les courbes 37a, 37b et 37c correspondent respectivement à une table nue, à une table équipée d'une rondelle de caoutchouc, à une table équipée d'une rondelle en Téflon^{®}.

Sur la figure 6, les courbes 39a, 39b et 39c correspondent respectivement à une table nue, à une table équipée de rondelles en caoutchouc et à une table équipée de rondelles en Téflon^{®}.

Sur la figure 7, les courbes 41a, 41b et 41c correspondent respectivement à une table nue, à une table équipée de rondelles en caoutchouc et à une table équipée de rondelles en Téflon^{®}.

On voit clairement qu'au dessus de 5000 Hz quelle que soit la charge explosive, des rondelles en caoutchouc permettent une diminution nette des accélérations, alors qu'en dessous de 2000 Hz, la matière de ces rondelles est sans influence. On note également que des rondelles en Téflon^{®} ont un effet voisin mais moindre. L'effet de réduction des accélérations n'apparaît qu'au dessus de 8000 Hz avec un effet moitié moindre de celui du caoutchouc. Cet effet est d'autant plus sensible que le choc est important. En particulier, on ne note pas d'effet avec une charge de 20 grammes d'explosif.

Ces rondelles amortissantes permettent un concept entièrement nouveau du montage à double plaque par rapport à l'art antérieur connu. Le montage à double plaque ne sert plus à une résonance qui ne peut être efficace que pour certaines fréquences, mais au contraire à un amortissement pour toute une bande de fréquence. Cet amortissement permet une utilisation nouvelle de la table à double plateau, par exemple en compensant à haute fréquence une augmentation de la charge explosive destinée à augmenter les accélérations à basses fréquences.

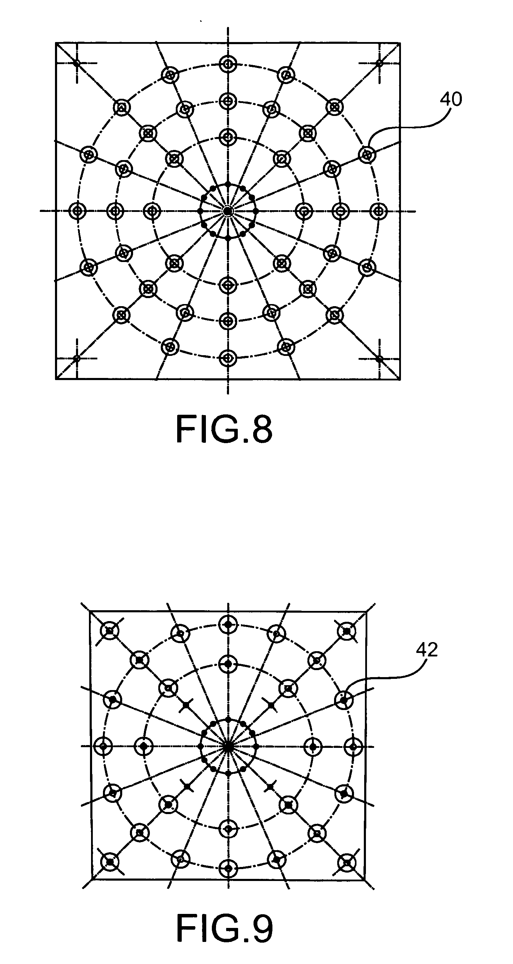

La figure 8 représente une vue de face du plateau inférieur et la figure 9 représente une vue de face du plateau supérieur 8. Ces schémas présentent les perçages des liaisons des deux plateaux. Ils assurent la symétrie de transmission du choc du fait de leur disposition en cercles concentriques. Toutefois, seul certain de ces perçages 40, 42 sont utilisés dans chaque essais, en fonction du spécimen à tester et des spécifications.

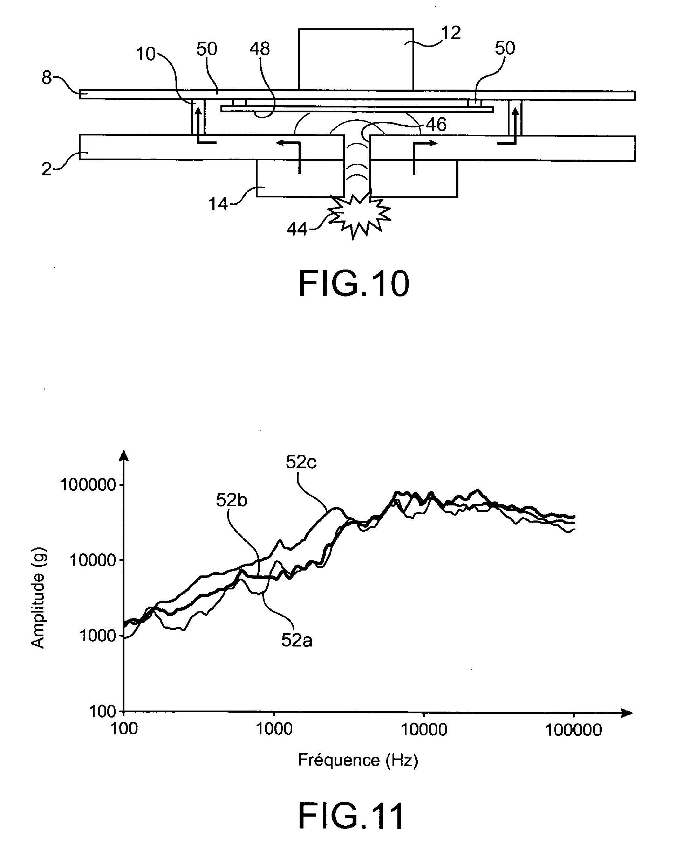

On a représenté sur la figure 10 une vue schématique en coupe montrant une table à choc conforme à la présente invention équipée d'une rondelle de support de l'explosif 14 percée en son centre d'un trou 44. Le plateau inférieur 2 est également percé en son centre d'un orifice 46 qui coïncide avec le trou 44. Une plaque de protection 48 est disposée en regard des orifices 44 et 46. La plaque 48 est fixée sous la face inférieure du plateau supérieur 8 par l'intermédiaire d'entretoise 50. Elle est réalisée en acier et elle possède une épaisseur de 10 mm.

Comme on l'a exposé précédemment, les chocs à basses fréquences sont décrits comme étant des chocs en champ lointain du fait de l'éloignement entre la source du choc et sa mesure. On comprend alors qu'une table à choc, du fait de ses dimensions nécessairement réduites n'est pas particulièrement adaptée quand on veut simuler de fortes accélérations à basses fréquences car la transmission du choc se fait essentiellement par conduction dans les matériaux de la table à choc. C'est pourquoi, pour augmenter les accélérations à basses fréquences, selon l'invention on prolonge la durée de l'excitation en induisant un second mode de transmission du choc par l'air ambiant.

La figure 11 compare des essais réalisés avec des cylindres de support de l'explosif 14 percés de trous de diamètre 10 mm et 30 mm respectivement avec, en référence, une rondelle de support d'explosif non percée. La référence 52a désigne une table standard (sans trou), la référence 52b une table percée d'un trou de 10 mm et la référence 52c une table percée d'un trou de 30 mm.

On constate que dans les basses fréquences, plus le diamètre de perçage est élevé plus les accélérations sont fortes, toutes choses égales par ailleurs. Par contre, les perçages n'ont aucune influence au dessus de 3000Hz. De façon plus précise on constate aussi que plus le diamètre de perçage est élevé, plus la fréquence à partir de laquelle le trou n'a plus d'influence est élevé. Pour un trou de 30mm de diamètre, le trou n'a plus d'influence au dessus de 3000Hz, alors que pour un trou de 10mm, cette influence disparaît dès 900Hz. On obtient donc, grâce à ce perçage, un effet sensible à basses fréquences seulement. De plus, on peut régler dans une certaine mesure le domaine de fréquence concerné en agissant sur le diamètre du trou.

## Revendications

1. Table à choc comportant au moins un plateau, un équipement à tester étant fixé sur le plateau et une charge explosive étant fixée sous le plateau **caractérisée en ce que** :
- la charge explosive (16) est ponctuelle,
- la table comporte un plateau supérieur (8) et un plateau inférieur (2) séparés par des plots (10), l'équipement à tester (12) étant fixé sur le plateau supérieur (8) et la charge explosive (16) étant fixée sous le plateau inférieur (2),
- les plots (10) qui séparent le plateau inférieur (2) et le plateau supérieur (8) comprennent deux rondelles amortissantes (28, 30) situées sur chacune des deux faces de la plaque supérieure (8), l'une des rondelles étant prise entre un élément d'entretoise (24) et une première face du plateau supérieur (8), l'autre rondelle étant prise entre une seconde face du plateau supérieur (8) et un écrou (34).

2. Table à choc selon la revendication 1, **caractérisée en ce qu'**une rondelle circulaire (14) de support d'explosif (16) est interposée entre le plateau et la charge explosive..

3. Table à choc selon la revendication 2, **caractérisée en ce que** la rondelle de support d'explosif (14) mesure de 200 à 400 mm de diamètre et a une épaisseur comprise entre 20 et 80 mm.

4. Table à choc selon l'une quelconque des revendications 1 à 3, **caractérisée en ce que** l'explosif utilisé est du Formex F4HV d'épaisseur comprise entre 3 et 6 mm.

5. Table à choc selon la revendication 4, **caractérisée en ce que** la longueur des plaques d'explosif est inférieure ou égale à 150 mm.

6. Table à choc selon l'une des revendications 1 à 5, **caractérisée en ce que** le matériau amortissant des rondelles (28, 30) est le caoutchouc ou le téflon.

7. Table à choc selon l'une des revendication 1 à 6, **caractérisée en ce qu'**elle comporte un trou destiné à permettre la transmission du choc au plateau supérieur par l'air ambiant.

8. Table à choc selon la revendication 7, **caractérisée en ce que** la rondelle de support d'explosif (14) et la plaque inférieure (2) comportent un trou de transmission en leur centre (44, 46), trou destiné à permettre la transmission du choc au plateau supérieur (8) par l'air ambiant.

9. Table à choc selon la revendication 8, **caractérisée en ce qu'**une plaque de projection (48) est disposée sous la plaque supérieure (8) en regard du trou de transmission (44, 46) afin de protéger la plaque supérieure (8).

10. Table à choc selon la revendication 9, **caractérisée en ce que** la plaque de protection (48) est en acier et mesure 10 mm d'épaisseur.

11. Procédé d'essai d'un équipement (12) monté sur un plateau (2, 8) d'une table à choc selon la revendication 1 ou 6, **caractérisé en ce que** :
- on définit l'équipement à tester en termes de masse et de points de fixation ;
- on définit les spécifications du choc en terme de spectre de réponse au choc et éventuellement de direction du choc ;
- on définit la quantité d'explosif (16) à mettre en oeuvre à partir de l'expérience acquise et/ou de simulation numérique ;
- on définit la nature monoplaque ou double plaque (2, 8) de la table à choc.

12. Procédé selon la revendication 11, dans lequel la table à choc est une table comportant une plaque supérieure (8) et une plaque inférieure (2) espacées par des plots (10), **caractérisé en ce que** l'on procède à l'optimisation de la table en terme d'amortissement au niveau des plots (10) et de diamètre de perçage (44, 46) de la rondelle de support d'explosif.

## Claims

1. A shock table including at least one plate, a piece of equipment to be tested being attached on the plate and an explosive charge being attached under the plate, **characterized in that**:
- the explosive charge (16) is point-like,
- the table includes an upper plate (8) and a lower plate (2) separated by studs (10), the piece of equipment to be tested (12) being attached on the upper plate (8) and the explosive charge (16) being attached under the lower plate (2),
- the studs (10) which separate the lower plate (2) and the upper plate (8) comprise two damping washers (28, 30) located on each of the two faces of the upper plate (8), one of the washers being held between a spacer member (24) and a first face of the upper plate (8), the other washer being held between a second face of the upper plate (8) and a nut (34).

2. The shock table according to claim 1, **characterized in that** an explosive support (16) circular washer (14) is interposed between the plate and the explosive charge.

3. The shock table according to claim 2, **characterized in that** the explosive support washer (14) measures from 200 to 400 mm in diameter and has a thickness comprised between 20 and 80 mm.

4. The shock table according to any of claims 1 to 3, **characterized in that** the explosive used is Formex F4HV with a thickness comprised between 3 and 6 mm.

5. The shock table according to claim 4, **characterized in that** the length of the explosive plates is less than or equal to 150 mm.

6. The shock table according to any of claims 1 to 5, **characterized in that** the damping material of the washers (28, 30) is rubber or Teflon.

7. The shock table according to any of claims 1 to 6, **characterized in that** it includes a hole intended for allowing transmission of the shock to the upper plate through ambient air.

8. The shock table according to claim 7, **characterized in that** the explosive support washer (14) and the lower plate (2) include a transmission hole in their centre (44, 46), a hole intended to allow transmission of the shock to the upper plate (8) through ambient air.

9. The shock table according to claim 8, **characterized in that** a protective plate (48) is positioned under the upper plate (8) facing the transmission hole (44, 46) in order to protect the upper plate (8).

10. The shock table according to claim 9, **characterized in that** the protective plate (48) is in steel and measures 10 mm in thickness.

11. A method for testing a piece of equipment (12) mounted on a plate (2, 8) of a shock table according to claim 1 or 6, **characterized in that**:
- the piece of equipment to be tested is defined in terms of mass and of attachment points;
- the specifications of the shock are defined in terms of a shock response spectrum and optionally of the direction of the shock;
- the amount of explosive (16) to be applied is defined from acquired experience and/or numerical simulation;
- the single-plate or double-plate nature (2, 8) of the shock table is defined.

12. The method according to claim 11, wherein the shock table is a table including an upper plate (8) and a lower plate (2) spaced apart by studs (10), **characterized in that** it is proceeded with optimization of the table in terms of damping at the studs (10) and of the drill-hole diameter (44, 46) of the explosive support washer.

## Patentansprüche

1. Stoß- bzw. Schlag-Erschütterungs- Test- bzw. Prüftisch, welcher wenigstens eine Platte, eine auf der Platte befestigbare zu testende bzw. zu prüfende Ausrüstung bzw. Einrichtung, sowie eine unter der Platte befestigte Sprengstoffladung umfasst, **dadurch gekennzeichnet, dass**
- die Sprengstoffladung (16) punktförmig ist,
- der Tisch eine obere Platte (8) und eine untere Platte (2) umfasst, die durch Distanzblöcke bzw. -buchsen (16) getrennt sind und dass die zu prüfende bzw. zu testende Ausrüstung bzw. Einrichtung (12) auf der oberen Platte (8) befestigt ist und die Sprengstoffladung (16) unter der unteren Platte (2) befestift ist,
- die Distanzblöcke bzw. -buchsen (10), welche die untere Platte (2) und die obere Platte (8) voneinander trennen, zwei Dämpfungsbeileg- bzw. -Unterlegscheiben (28, 30) umfassen, welche jeweils zu beiden Seiten der oberen Platte (8) liegen, und dass die eine der beiden Beileg- bzw. Unterlegscheiben zwischen einem Zwischenträgerelement (24) und einer ersten Seite der oberen Platte (8) eingeschlossen ist und die andere Beileg- bzw. Unterlegscheibe zwischen einer zweiten Seite der oberen Platte (8) und einer Schraubmutter (34) eingeschlossen ist.

2. Stoß- bzw. Schlag- Prüf- bzw. -Testtisch nach Anspruch 1, **dadurch gekennzeichnet, dass** zwischen der Platte und der Sprengladung eine kreisförmige Beileg- bzw. Unteriegscheibe (14) zur Halterung des Sprengstoffs (16) vorgesehen ist.

3. Stoß- bzw. Schlag- Prüf- bzw. -Testtisch nach Anspruch 2 , **dadurch gekennzeichnet, dass** die Sprengstoff-Halterungsscheibe (14) einen Durchmesser von 200 bis 400 mm und eine Dicke im Bereich zwischen 20 und 80 mm besitzt.

4. Stoß- bzw. Schlag- Prüf-bzw.-Testtisch nach einem der Ansprüche 1 bis 3, **dadurch gekennzeichnet, dass** der verwendete Sprengstoff FORMEX F4HV mit einer Dicke im Bereich zwischen 3 und 6 mm ist.

5. Stoß- bzw. Schlag- Prüf- bzw. -Testtisch nach Anspruch 4, **dadurch gekennzeichnet, dass** die Länge der Sprengstoffplatten kleiner als oder gleich 150 mm ist.

6. Stoß- bzw. Schlag- Prüf- bzw. -Testtisch nach einem der Ansprüche 1 bis 5, **dadurch gekennzeichnet, dass** das Dämpfungsmaterial der Beileg- bzw. Unterlegscheiben (28, 30) Kautschuk oder Teflon ist.

7. Stoß- bzw. Schlag-Prüf- bzw. -Testtisch nach einem der Ansprüche 1 bis 6, **dadurch gekennzeichnet, dass** der Tisch eine Öffnung bzw. ein Loch aufweist, der/das die Übertragung bzw. den Durchlaß des Stoßes bzw. Schlags zu der oberen Platte (8) durch die Umgebungsluft gestattet.

8. Stoß-bzw.Schtag-Prüf-bzw. -Testtisch nach Anspruch 7, **dadurch gekennzeichnet, dass** die Beileg- bzw. Unterlegscheibe (14) für die Halterung des Sprengstoffs und die untere Platte (2) in ihrer Mitte (44, 46) eine Durchtrittsöffnung aufweisen, welche die Übertragung bzw. den Durchlass des Stoßes bzw. Schlags zu der oberen Plaste (8) durch die Umgebungsluft gestattet.

9. Stoß- bzw.- Sschlag- Prüf- bzw.-Testtischnach Anspruch 8, **dadurch gekennzeichnet, dass** unter der oberen Platte (8) in Ausrichtung mit der Durchtrittsöffnung (44, 46) eine Schutzplatte (48) zum Schutz der oberen Platte (8) vorgesehen ist.

10. Stoß- bzw. Schlag- Prüf- bzw.- Testtisch nach Anspruch 9, **dadurch gekennzeichnet, dass** die Schutzplatte (48) aus Stahl besteht und eine Dickenabmessung von 10 mm besitzt.

11. Verfahren zum Prüfen bzw. Testen einer Ausrüstung bzw. Einrichtung (12), die auf einer Platte (2, 8) eines Stoß- bzw. Schlag- Prüf- bzw.- Testtisches nach einem der Ansprüche 1 bis 6 montiert ist, **dadurch gekennzeichnet, dass**
- man die zu testende Ausrüstung bzw. Einrichtung hinsichtlich Masse und Befestigungspunkten bestimmt,
- man die Eigenschaften des Stoßes bzw, Schlags hinsichtlich dem Spektrum des Ansprechens auf den Stoß bzw. Schlag und gegebenenfalls der Richtung des Stoßes bzw. Schlags bestimmt,
- man auf der Grundlage von Erfahrung oder von numerischer Simulation die anzuwendende Sprengstoffmenge (16) bestimmt,
- man den Test-bzw. Prüftisch hinsichtlich seiner Bauart mit einer Platte oder mit Doppelplatte (2, 8) bestimmt.

12. Verfahren nach Anspruch 11, bei welchem der Stoß- bzw. Schlag-Prüf-bzw.-Testtisch ein Tisch ist, welcher eine obere Platte (8) und eine untere Platte (2) aufweist, die mittels Distanzblöcken bzw. -Buchsen (10) in Abstand voneinander gehalten werden, **dadurch gekennzeichnet, dass** man eine Optimierung des Tisches hinsichtlich Dämpfung auf der Ebene der Distanzblöcke (10) und hinsichtlich des Durchmessers der Bohrung (44, 46) der Beileg- bzw. Unterlagscheibe für die Sprengstoffhalterung vornimmt.
